# EUROPEAN PATENT APPLICATION

(11) **EP 4 624 724 A1**
(43) Date of publication of application: **01.10.2025**
(21) Application number: 23884561.4
(22) Date of filing: 11.10.2023
(51) Int. Cl.: E21B 47/00

(54) **OPTICAL FIBER LAYOUT DEVICE AND METHOD FOR BOREHOLE MEASUREMENT**

(30) Priority: 13.06.2023 CN 202310699887
(71) Applicant: Nanjing Center, China Geological Survey (Geoscience Innovation Center of East China), Nanjing, Jiangsu 210016 (CN)
(72) Inventor: ZHOU, Xun, Nanjing, Jiangsu 210016 (CN); JIANG, Yuehua, Nanjing, Jiangsu 210016 (CN); CHEN, Hongfeng, Nanjing, Jiangsu 210016 (CN); MEI, Shijia, Nanjing, Jiangsu 210016 (CN); LIU, Lin, Nanjing, Jiangsu 210016 (CN); YANG, Hai, Nanjing, Jiangsu 210016 (CN); CHEN, Zi, Nanjing, Jiangsu 210016 (CN); ZHOU, Quanping, Nanjing, Jiangsu 210016 (CN); LI, Yun, Nanjing, Jiangsu 210016 (CN); YU, Junjie, Nanjing, Jiangsu 210016 (CN); XIANG, Hongli, Nanjing, Jiangsu 210016 (CN); YANG, Guoqiang, Nanjing, Jiangsu 210016 (CN)
(74) Representative: HGF
(86) International application number: PCT/CN2023/123934
(87) International publication number: WO 2024/093629

(57) **Abstract**

The invention discloses an in-well measurement optical fiber laying device and method. The device comprises a locking cabin, an optical fiber guide head and a locking assembly; the locking cabin is a hollow cylinder with an opening in an upper portion, and a thread connected with a drilling rod is arranged on an inner wall of a top portion of the locking cabin; the locking assembly is installed in the locking cabin; a bottom portion of the optical fiber guide head is conical, and a top portion of the optical fiber guide head is detachably connected with the locking cabin through the locking assembly; and the optical fiber guide head is provided with paired optical fiber through holes for an optical fiber to penetrate in and out to form a loop. According to the optical fiber laying device, the detachable guide head locking cabin is installed on a lower portion of the drilling rod, and the locking assembly is arranged in the guide head locking cabin. The optical fiber guide head is hung by the locking assembly, flexible connection load bearing of the optical fiber is replaced by rigid connection load bearing among the drilling rod, the locking cabin and the guide head in drill lifting and descending process, a situation that the optical fiber is snapped and a drilling hole is blocked and scrapped due to the snapped optical fiber is avoided, and a situation that the optical fiber swings back and forth is also avoided, such that the optical fiber laying process is smoother and more standardized.

## Description

### TECHNICAL FIELD

The present invention belongs to the technical field of optical fiber measurement and monitoring, and relates to an in-well measurement optical fiber laying device and method.

### BACKGROUND

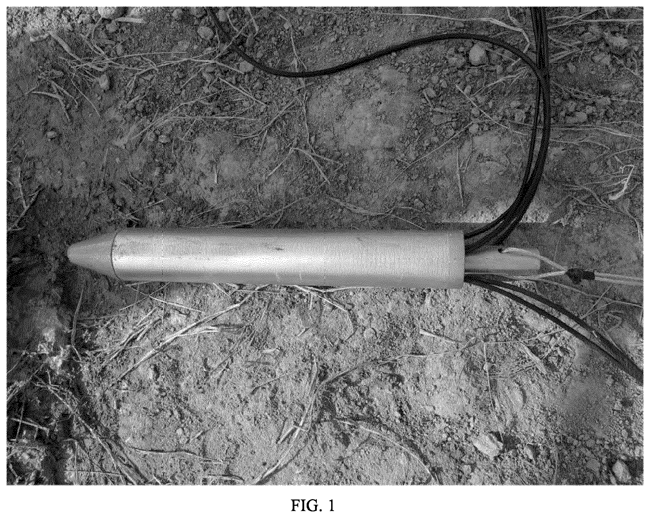

As a novel measurement and monitoring technology, an optical fiber monitoring technology can adapt to complex environmental conditions and provide continuous high-precision measurement data such as measurement deformation and temperature. In the monitoring of settlement deformation of ground, roads, buildings and dams, it is necessary to lay vertical optical fibers in a monitoring well and keep the optical fibers vertically tightened. The existing layout method is generally to tie a heavy object (optical fiber guide head, the same below) to a lower end of an optical fiber and put it vertically into the monitoring well after the completion of drilling in the monitoring well. For complex geological conditions, a drilling hole is prone to aging, collapse and shrinkage, which leads to a situation that the optical fiber guide head is stuck in a middle of a wellbore and cannot move up and down. In this case, it is necessary to use a drilling rod of a drilling rig for jacking. When jacking cannot be realized even using the drilling rod, it is necessary to recover the optical fiber, and then lay the optical fiber again after reaming and cleaning the drilling hole with the drilling rig. As shown in FIG. 1, taking NanZee Sensing Corporation as an example, an existing optical fiber throwing device is similar in structure to a plumb-bob, and is internally provided with a screw and nut fastening device for fixing the and mooring the optical fiber. When the drilling hole is inclined, reduced in diameter, bent, or the like, a vertical guiding function cannot be realized by the drilling hole, and a problem that the optical fiber cannot be put to the bottom or recovered due to being stuck in the middle cannot be avoided.

The jacking and retracting operations under the above conditions exert great tension on the optical fiber, which greatly increases the risk of the optical fiber being pulled off, ranging from the loss of the optical fiber and equipment that have been put in, to the scrapping of the drilling hole. The probability and risk of occurrence of the above problems tend to increase sharply with the increase of a drilling depth, and meanwhile, the economic loss is also sharply enlarged, especially in major engineering construction and major scientific research engineering construction, the construction cost of the deep drilling is often tens of millions of yuan, and once the drilling hole is scrapped, the loss is difficult to estimate. Therefore, it is necessary to improve the existing optical fiber laying device and technical method.

### SUMMARY

Object of the present invention: a technical problem to be solved by the present invention is to provide an in-well measurement optical fiber laying device, aiming at the shortcomings of the prior art, so as to realize the smooth laying of vertical optical fibers, eliminate a load bearing effect in the process of laying the optical fibers and avoid the optical fibers from being pulled off.

In order to achieve the above-mentioned invention objects, the present invention employs the following technical solutions.

An in-well measurement optical fiber laying device comprises a locking cabin, an optical fiber guide head and a locking assembly; the locking cabin is a hollow cylinder with an opening in an upper portion, and a thread connected with a drilling rod is arranged on an inner wall of a top portion of the locking cabin; the locking assembly is mounted in the locking cabin; a bottom portion of the optical fiber guide head is conical, and a top portion of the optical fiber guide head is detachably connected with the locking cabin through the locking assembly; and the optical fiber guide head is provided with paired optical fiber through holes for an optical fiber to penetrate in and out to form a loop.

Further, a top portion of the optical fiber guide head is provided with a circular step; and a top portion of the circular step is provided with a lug matched with the locking assembly in the locking cabin.

Further, the optical fiber guide head comprises a guide head upper half section and a guide head lower half section; the guide head upper half section is a hollow cylinder with a closed top portion and an open lower portion, and a top portion of the guide head upper half section is integrally formed with the circular step through a connecting rod; and the top portion of the guide head upper half section is located at a periphery of the connecting rod and is provided with paired optical fiber through holes.

Further, the guide head lower half section is a hollow cylinder with a closed conical cap.

Further, the guide head upper half section is connected to the guide head lower half section by means of internal and external threads.

Further, the locking assembly comprises an electromagnet, locking rods and a compression spring; the electromagnet is arranged on an inner bottom plate of the locking cabin; one group of the locking rods are provided, are cylindrical and provided with steps, and are horizontally arranged outside the bottom plate with the electromagnet as a circle center; one end of the compression spring is connected to the step of the locking rod, and the other end of the compression spring is connected to the electromagnet; the lug penetrates through the bottom plate, and a top portion of the lug is provided with a locking hole matched with an end portion of the locking rod; and when the electromagnet is electrified, the locking rod moves towards the electromagnet by an attractive force and compresses the compression spring, and the end portion of the locking rod is separated from the locking hole of the lug to realize an unlocking action of the lower circular step; at the moment, the locking cabin is separated from the lower circular step and the optical fiber guide head.

Further, a cable runs through a side surface of the locking cabin, one end of the cable is connected to the electromagnet, and the other end of the cable is connected to a ground power supply through a wall surface of the locking cabin.

Further, a diameter of the circular step is equal to a diameter of the locking cabin and larger than a diameter of a top portion of the lower optical fiber guide head; and a diameter of the connecting rod is smaller than the diameter of the circular step and the diameter of the top portion of the lower optical fiber guide head.

Furthermore, the present invention also provides an in-well measurement optical fiber laying method, comprising the following steps of:
S1: connecting a locking cabin to a drilling rod, and connecting an optical fiber guide head below the locking cabin through a locking assembly;
S2: threading an optical fiber into and out of a pair of optical fiber through holes to form a loop;
S3: letting the optical fiber guide head enter a drilling hole along with the drilling rod and downwards putting the optical fiber guide head into a monitoring well, so that the optical fiber follows the optical fiber guide head to a designated throwing position; and
S4: pulling the optical fiber from a wellhead to straighten the optical fiber, and then unlocking the optical fiber through the locking assembly, and separating the optical fiber guide head from the locking cabin, thus completing laying.

Further, the method further comprises step S5: when the optical fiber fails to be lowered to the designated position, lifting the drilling rod to retract the locking cabin, the optical fiber guide head and the optical fiber penetrated in the optical fiber guide head, and then re-laying the optical fiber after hole sweeping and reaming.

Beneficial effects:
(1) According to the optical fiber laying device of the present invention, the detachable guide head locking cabin is installed on a lower portion of the drilling rod, and the locking assembly is arranged in the guide head locking cabin. The optical fiber guide head is hung by the locking assembly, flexible connection load bearing of the optical fiber is replaced by rigid connection load bearing among the drilling rod, the locking cabin and the guide head in drill lifting and descending process, a situation that the optical fiber is snapped and a drilling hole is blocked and scrapped due to the snapped optical fiber is avoided, and a situation that the optical fiber swings back and forth is also avoided, such that the optical fiber laying process is smoother and more standardized.
(2) The drilling rod of the drilling rig is used as an optical fiber laying tool, the rigid connection among the drilling rod, the locking cabin and the guide head in drill lifting and descending process replaces a load-bearing structure using the optical fiber as a flexible connection in the prior art, so that the vertical guiding function can be better realized, and the failure probability in the process of laying and recovering the optical fiber is greatly reduced, the situation that the optical fiber is snapped and the drilling hole is blocked and scrapped due to the snapped optical fiber is avoided, and the situation that the optical fiber swings back and forth is also avoided, such that the optical fiber throwing, especially the deep-hole optical fiber throwing is smoother and safer, and the risk of drilling and equipment scrapping can be effectively avoided, so that the optical fiber laying process is smoother and more standardized. The locking cabin can be reused with low cost, which has obvious technical progress compared with the traditional optical fiber laying method.

### BRIEF DESCRIPTION OF THE DRAWINGS

The advantages of the above and/or other aspects of the present invention will become more apparent by further explaining the present invention with reference to the following drawings and detailed description.
FIG. 1 is a photo of an existing common optical fiber throwing device.
{0FIG. 2 is a schematic diagram showing an appearance of an in-well measurement optical fiber laying device according to the present invention.
FIG. 3 is a schematic diagram showing an internal structure of the in-well measurement optical fiber laying device according to the present invention.

Reference numerals respectively represent:
1 refers to locking cabin; 2 refers to bottom plate; 3 refers to electromagnet; 4 refers to cable; 5 refers to locking rod; 6 refers to compression spring; 7 refers to optical fiber guide head; 8 refers to circular step; 9 refers to lug; 10 refers to connecting rod; 11 refers to guide head upper half section; 12 refers to guide head lower half section; 13 refers to optical fiber through hole; and 14 refers to optical fiber.

### DETAILED DESCRIPTION

The present invention can be better understood from the following embodiments.

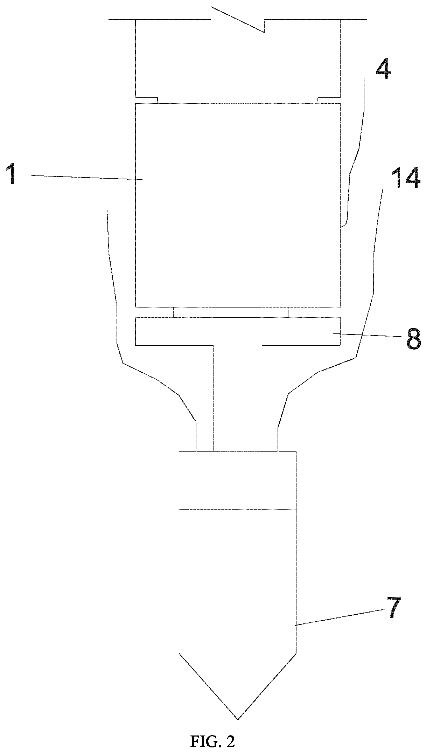

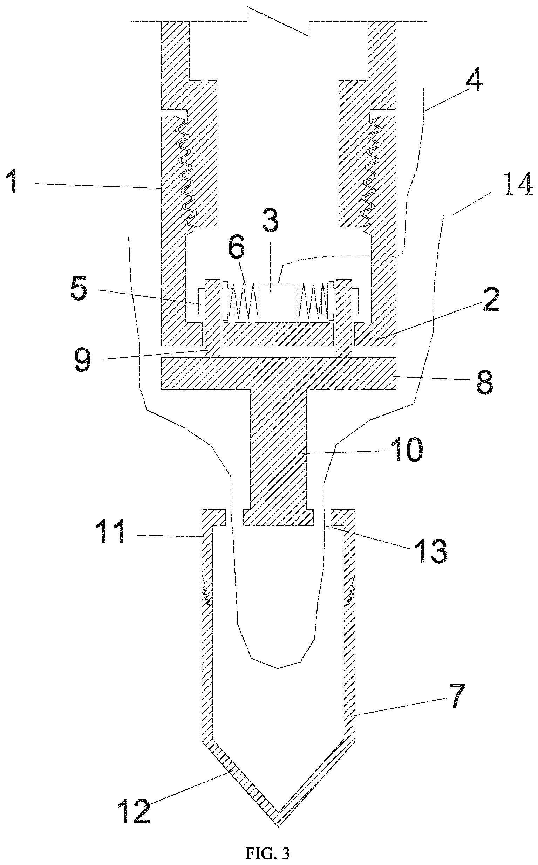

With reference to FIG. 2 and FIG. 3, an in-well measurement optical fiber laying device of the present invention comprises a locking cabin 1, an optical fiber guide head 7 and a locking assembly. The locking cabin1 is a hollow cylinder with an opening in an upper portion, and an inner wall of a top portion of the locking cabin is provided with a female thread which is used for being connected to a male thread at a lower portion of a regular drilling rod. The locking assembly 1 is mounted in the locking cabin. A bottom portion of the optical fiber guide head 7 is conical, and a top portion of the optical fiber guide head is detachably connected with the locking cabin 1 through the locking assembly. The optical fiber guide head 7 is provided with paired optical fiber through holes13 for an optical fiber 14 to penetrate in and out to form a loop.

As shown in FIG. 3, a top portion of the optical fiber guide head 7 is provided with a circular step 8. A top portion of the circular step 8 is provided with a lug 9 matched with the locking assembly in the locking cabin 1.

The optical fiber guide head 7 comprises a guide head upper half section 11 and a guide head lower half section 12. The guide head upper half section 11 is a hollow cylinder with a closed top portion and an open lower portion, and a top portion of the guide head upper half section11 is integrally formed with the circular step 8 through a connecting rod 10. The top portion of the guide head upper half section 11 is located at a periphery of the connecting rod 10 and is provided with paired optical fiber through holes 13.

The guide head lower half section 12 is a hollow cylinder with a closed conical cap.

The guide head upper half section 11 is connected to the guide head lower half section 12 by means of internal and external threads.

The locking assembly comprises an electromagnet 3, locking rods 5 and a compression spring 6. The electromagnet 3 is arranged on an inner bottom plate 2 of the locking cabin 1. One group of the locking rods 5 are provided, are cylindrical and provided with steps, and are horizontally arranged outside the bottom plate 2 with the electromagnet 3 as a circle center. One end of the compression spring 6 is connected to the step of the locking rod 5, and the other end of the compression spring is connected to the electromagnet 3. The lug 9 penetrates through the bottom plate 2, and a top portion of the lug is provided with a locking hole matched with an end portion of the locking rod 5. When the electromagnet 3 is electrified, the locking rod 5 moves towards the electromagnet 3 by an attractive force and compresses the compression spring 6, and the end portion of the locking rod 5 is separated from the locking hole of the lug 9 to realize an unlocking action of the lower circular step 8; at the moment, the locking cabin 1 is separated from the lower circular step 8 and the optical fiber guide head 7.

A cable 4 runs through a side surface of the locking cabin 1, one end of the cable 4 is connected to the electromagnet 3, and the other end of the cable 4 is connected to a ground power supply through a wall surface of the locking cabin 1. The cable is used to switch on and off a current to the electromagnet 3. When the electromagnet 3 is electrified, the locking rod 5 is attracted to carry out an unlocking action, and when the electromagnet is powered off, locking is realized under the tension of the compression spring 6.

A diameter of the circular step 8 is equal to a diameter of the locking cabin 1 and larger than a diameter of a top portion of the lower optical fiber guide head 7. A diameter of the connecting rod 10 is smaller than the diameter of the circular step 8 and the diameter of the top portion of the lower optical fiber guide head 7.

When in use, the locking cabin 1 is connected to the drilling rod first and the electromagnet 3 is electrified, so that the locking assembly is in an unlocked state. The lug 9 of the guide head is inserted into the locking cabin 1, the electromagnet 3 is powered off, and the locking rod 5 rebounds under the action of the compression spring 6 to lock the lug 9. The guide head lower half section 12 is unscrewed to facilitate the optical fiber 14 to penetrate in and out to form the loop. The guide head lower half section 12 is screwed after the optical fiber is perforated. At this point, the optical fiber laying device and the drilling rod are assembled integrally. When the optical fiber laying device enters a drilling process with the drilling rod, when encountering slight obstacles to generate resistance, the optical fiber guide head 7 and the locking cabin 1 are in a compressed state, forming a rigid connection with the drilling rod under longitudinal pressure. The wide circular step 8 at the top portion of the optical fiber guide head 7 plays a good role in balancing the pressure conducted from bottom to top and stabilizing vertical guidance. The conical structure at the bottom can better split soil obstacles and reduce the resistance in a lowering process. When the optical fiber 14 reaches a designated throwing position, the optical fiber is pulled up from a wellhead to straighten the optical fiber. Because the optical fiber guide head 7 and the locking cabin 1 are in a tight state, there is no friction between the locking rod 5 and the lug 9. At this time, the electromagnet 3 is electrified, and the lug 9 can be easily unlocked. If the optical fiber 14 fails to reach the designated position successfully, it is necessary to take back the put optical fiber to re-lay after hole sweeping and reaming, and only need to lift the drilling rod. At this time, the optical fiber guide head 7 and the locking cabin 1 change from the tight state to a tensile state, and the tensile force is borne by the lug 9 and the locking rod 5. Therefore, in the process of optical fiber laying and recovery, the optical fiber 14 is never used as a load-bearing component, which can effectively reduce the risk that the optical fiber is broken and the guide head cannot be recovered. The guide head and the drilling rod are integrated and will not sway left and right, which can ensure the smoothness of vertical guidance and delivery to the greatest extent.

The present invention provides the ideas and methods of the in-well measurement optical fiber laying device and method. There are many methods and ways to realize the technical solutions. The above only describes the preferred embodiments of the present invention. It should be pointed out that those of ordinary skills in the art can make some improvements and embellishments without departing from the principle of the present invention, and these improvements and embellishments should also be regarded as falling with the scope of protection of the present invention. All the unspecified components in the embodiments can be realized by the prior art.

## Claims

1. An in-well measurement optical fiber laying device, comprising a locking cabin (1), an optical fiber guide head (7)and a locking assembly; wherein the locking cabin (1) is a hollow cylinder with an opening in an upper portion, and a thread connected with a drilling rod is arranged on an inner wall of a top portion of the locking cabin; the locking assembly is installed in the locking cabin (1); a bottom portion of the optical fiber guide head (7) is conical, and a top portion of the optical fiber guide head is detachably connected with the locking cabin (1) through the locking assembly; and the optical fiber guide head (7) is provided with paired optical fiber through holes (13) for an optical fiber (14) to penetrate in and out to form a loop.

2. The in-well measurement optical fiber laying device according to claim 1, wherein a top portion of the optical fiber guide head (7) is provided with a circular step (8); and a top portion of the circular step (8) is provided with a lug (9) matched with the locking assembly in the locking cabin (1).

3. The in-well measurement optical fiber laying device according to claim 2, wherein the optical fiber guide head (7) comprises a guide head upper half section (11) and a guide head lower half section (12); the guide head upper half section (11) is a hollow cylinder with a closed top portion and an open lower portion, and a top portion of the guide head upper half section (11) is integrally formed with the circular step (8) through a connecting rod (10); and the top portion of the guide head upper half section (11) is located at a periphery of the connecting rod (10) and is provided with paired optical fiber through holes (13).

4. The in-well measurement optical fiber laying device according to claim 3, wherein the guide head lower half section (12) is a hollow cylinder with a closed conical cap.

5. The in-well measurement optical fiber laying device according to claim 3, wherein the guide head upper half section (11) is connected to the guide head lower half section by means of internal and external threads.

6. The in-well measurement optical fiber laying device according to claim 2, wherein the locking assembly comprises an electromagnet (3), locking rods (5) and a compression spring (6); the electromagnet (3) is arranged on an inner bottom plate (2) of the locking cabin (1); one group of the locking rods (5) are provided, are cylindrical and provided with steps, and are horizontally arranged outside the bottom plate (2) with the electromagnet (3) as a circle center; one end of the compression spring (6) is connected to the step of the locking rod (5), and the other end of the compression spring is connected to the electromagnet (3); the lug (9) penetrates through the bottom plate (2), and a top portion of the lug is provided with a locking hole matched with an end portion of the locking rod (5); and when the electromagnet (3) is electrified, the locking rod (5) moves towards the electromagnet (3) by an attractive force and compresses the compression spring (6), and the end portion of the locking rod (5) is separated from the locking hole of the lug (9) to realize an unlocking action of the lower circular step (8); at the moment, the locking cabin (1) is separated from the lower circular step (8) and the optical fiber guide head (7).

7. The in-well measurement optical fiber laying device according to claim 2, wherein a cable (4) runs through a side surface of the locking cabin (1), one end of the cable (4) is connected to the electromagnet (3), and the other end of the cable is connected to a ground power supply through a wall surface of the locking cabin (1).

8. The in-well measurement optical fiber laying device according to claim 2, wherein a diameter of the circular step (8) is equal to a diameter of the locking cabin (1) and larger than a diameter of a top portion of the lower optical fiber guide head (7); and a diameter of the connecting rod (10) is smaller than the diameter of the circular step (8) and the diameter of the top portion of the lower optical fiber guide head (7).

9. An in-well measurement optical fiber laying method using the device according to claim 1, comprising the following steps of:
S1: connecting a locking cabin (1) to a drilling rod, and connecting an optical fiber guide head (7) below the locking cabin (1) through a locking assembly;
S2: threading an optical fiber (14) into and out of a pair of optical fiber through holes (13) to form a loop;
S3: letting the optical fiber guide head (7) enter a drilling hole along with the drilling rod and downwards putting the optical fiber guide head into a monitoring well, so that the optical fiber (14) follows the optical fiber guide head (7) to a designated throwing position; and
S4: pulling the optical fiber (14) from a wellhead to straighten the optical fiber, and then unlocking the optical fiber through the locking assembly, and separating the optical fiber guide head (7) from the locking cabin (1), thus completing laying.

10. The in-well measurement optical fiber laying method according to claim 9, further comprising step S5: when the optical fiber (14) fails to be lowered to the designated position, lifting the drilling rod to retract the locking cabin (1), the optical fiber guide head (7) and the optical fiber (14) penetrated in the optical fiber guide head (7), and then re-laying the optical fiber after hole sweeping and reaming.
